Europäisches Patentamt

European Patent Office

Office européen des brevets

(19)

(11) **EP 1 217 345 A1**

(12) **EUROPEAN PATENT APPLICATION**

(43) Date of publication:
**26.06.2002 Bulletin 2002/26**

(51) Int Cl.[7]: **G01G 19/414**, G06F 17/60

(21) Application number: **00128386.0**

(22) Date of filing: **22.12.2000**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Bossard AG**
**6305 Zug (CH)**

(72) Inventors:
• **Muncy Henderson, Irving D.**
**8312 Steinhausen (CH)**

• **Grob, Beat J.**
**6330 Cham (CH)**

(74) Representative: **Blum, Rudolf Emil Ernst**
**c/o E. Blum & Co**
**Patentanwälte**
**Vorderberg 11**
**8044 Zürich (CH)**

(54) **A method for controlling the flow of several types of articles**

(57) A system is disclosed for controlling the flow of several types of articles from one or more suppliers (10a, 10b, 10c) to a point (1) of usage. A storage (4) at the point of usage is automatically monitored to detect a need for a refill. To minimize transport costs and impact on the operation at the point of delivery, a common date is determined for delivering refills for articles of various types. In order to keep the response time of the system as low as possible, a data base in a computer (9) is maintained with the delivery time of each type of article. This allows the system to know, when a need for a refill is detected, if a given type of article can be delivered in time for the next date of delivery. In addition to this, usage information is used to set a reordering threshold.

**Fig. 1**

## Description

The invention relates to a method for controlling the flow of several types of articles from one or more suppliers to a point of usage according to the preamble of the independent claims.

A method of this type is disclosed in EP 0 915 325. In this method, the articles are stored in bins at the point of usage. Each bin is monitored by an electronic scale for determining the amount of articles inside it. Once this amount falls below a re-order threshold, a refill for the bin is ordered automatically.

This type of system has the disadvantage that refills arrive at the point of sale at arbitrary times, which increases the costs for shipping and tends to disrupt regular workflow.

The problem to be solved by the present invention is therefore to provide a method of the above type that avoids this problem while efficiently exploiting the available resources.

This problem is solved by the independent claims.

In a first aspect of the invention, a common date of delivery is determined for delivering articles of various types. This helps to use transport resources efficiently, in particular if all ordered articles are commonly transported to the point of usage, and keeps a disruption of the normal workflow at the point of usage at a minimum. However, in order to keep the response time of the system as low as possible, a data base is maintained with the delivery time of each type of article. This allows the system to know, when the need for a refill is detected, if a given type of article can be delivered in time for the next date of delivery.

In addition to the delivery time, the data base can store a usage rate of each type of article. The usage rate can be used together with the delivery time of an article to calculate an individual reorder threshold for the article.

In a further aspect of the invention, usage characteristics are stored for each article type. These usage characteristics (e.g. usage rates) are used for individually deriving a reorder threshold value for each article type, wherein the article is re-ordered only if an amount of articles of a type falls below this value. The value is derived repetitively, i.e. it is automatically adjusted if the usage characteristics change.

The usage characteristics can e.g. comprise a predicted usage of articles. This allows to ensure that foreseeable fluctuations in usage are taken account of.

In particular, the usage can be predicted by using predictions for product items, i.e. for the items produced by the manufacturer. If it is known how many articles of a given type are required to manufacture one product item, a prediction of the number of product items to be manufactured can be used to predict the required number of articles of a given type. Hence, if a given set of types of articles are required for assembling the product item and a prediction of the number of product items is available, the usage of each type of article in the given set can be predicted.

Alternatively hereto, or in addition to this, the usage characteristics can comprise a maximum expected fluctuation of the amount of articles of a type in a given time interval. For instance, the maximum expected fluctuation can be derived from previously observed fluctuations. For this purpose, stored historical usage data can be scanned for finding a maximum drop or decrease in a given time interval. The maximum drop is then used to derive the maximum expected fluctuation.

In the present application, reference is made to "type of article". Articles of a given type are articles linked by one or more common characteristics, such as e.g. a common technical specification (e.g. screws of a given shape and size), a common place of storage at the point of usage, and/or a common supplier.

The terms "article" and "product item" are to be understood in a broad sense and do not only apply to individual items, such as screws or TV sets, but also to a "continuous" object, such as a fluid.

Further preferred embodiments, advantages and applications of the invention are described in the dependent claims as well as in the following specification of some preferred embodiments thereof. The specification makes reference to following figures:

Fig. 1 shows a general set-up for using the method according to the present invention,
Fig. 2 shows a possible set-up of the computer system of the service provider,
Fig. 3 illustrates the usage and refilling of a first type A of articles,
Fig. 4 illustrates the usage and refilling of a second type B of articles, and
Fig. 5 represent the usage of an article with strong fluctuations.

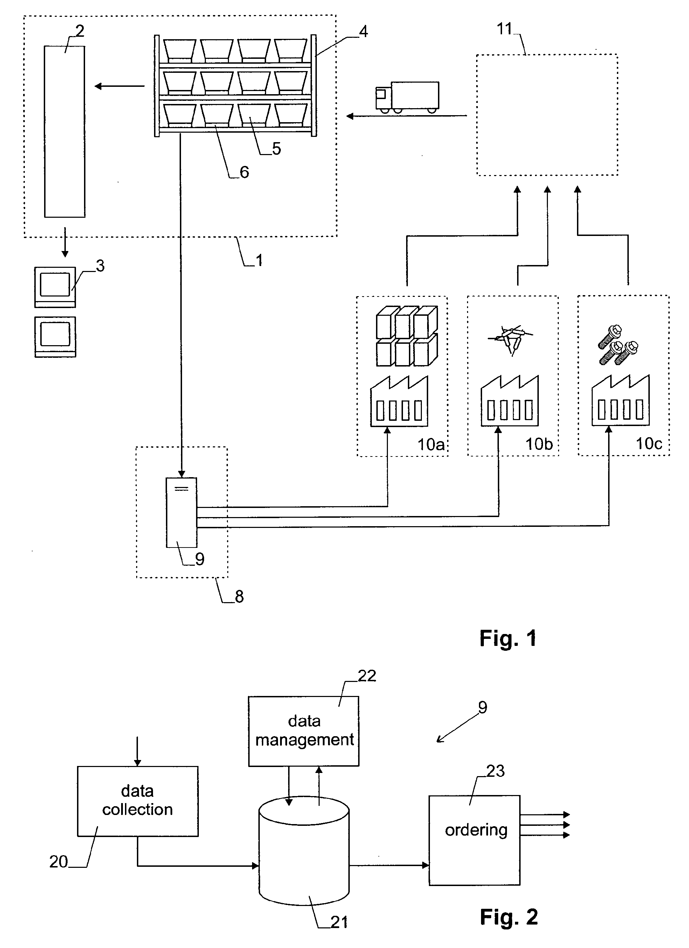

A possible set-up for using the present invention is shown in Fig. 1. This set-up shows, for the sake of an example, the production of TV sets, but the present invention can be used in a wide variety of other environments.

In the example of Fig. 1, a TV set manufacturer 1 ("point of usage") operates a production line 2 for assembling TV sets 3 ("product items"). During assembly of the TV sets, various articles of differing types are required, such as mechanical parts (screws, casings, etc.) and electronic parts (circuit elements, wires, PCBs, etc.). These articles are stored in a storage 4 and monitored electronically. For this purpose, the articles can e. g. be sorted by type and held by bins 5, wherein an electronic scale 6 is attached to each bin. This allows to determine the amount of articles of each type. A storage system of this type is described in EP 0 915 325.

The scales 6 are scanned automatically and the data retrieved in this way is transferred in electronic form to a service provider 8. Service provider 8 is preferably a party providing,logistic services for a plurality of manufacturers.

A computer 9 of service provider 8 receives the data retrieved from the scales 6 and determines the need for replenishing storage 4. If replenishing is required, orders are sent electronically or in conventional manner to appropriate suppliers 10a, 10b and/or 10c, which deliver the ordered articles to a hub point 11. From hub point 11, they are transferred to storage 4 of manufacturer 1. Hub point 11 can e.g. be operated by service provider 8.

A possible set-up of computer 9 of service provider 8 is shown in Fig. 2. A data collection system 20 receives the data from storage 4 and stores it in a data base 21. A data management system 22 manages the data in data base 21 and e.g. prepares information for ordering as described below. An ordering system scans data base 21 for orders to be issued and sends them to the appropriate supplier(s) 10a, 10b, 10c.

For each type of article, data base 21 may e. g. hold the following information:

- article name
- storage location in storage 4
- supplier information:

  - supplier's name
  - supplier's order reference
  - regular delivery time
  - minimum lot size

- reorder threshold
- express reorder threshold
- preferred delivery dates
- usage characteristics:

  - predicted usage
  - maximum expected fluctuation

- usage history

(It will be clear to a person skilled in the art that the above entries need not be stored in a record describing an article type, but some of them may e.g. also be stored in records describing a supplier or a manufacturer.)

While the meaning of some of the above database entries (e.g. article name) is obvious, the content and application of most entries will be illustrated in the following description of how the system determines the time for ordering replenishments from the suppliers 10a, 10b, 10c.

One aspect of the present system is based on the idea that refills should be delivered on certain days only. This minimizes the impact of the refilling operations on the work flow at assembly line 2 and keeps transport costs low. For instance, manufacturer 1 can instruct service supplier 8 that deliveries should take place every Monday. Alternatively, he might request delivery at another regular interval (e.g. every first Monday in a month) or provide some other rule that allows to establish a list of preferred delivery dates.

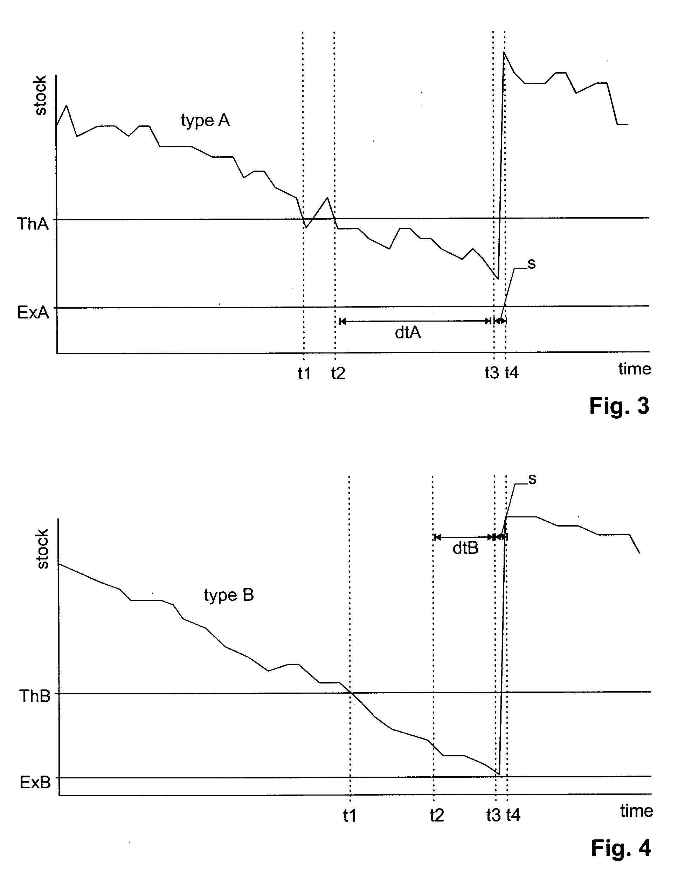

Fig. 3 shows how this goal is achieved for a articles of first type A. The curve illustrates the number of articles of this type available on stock at the manufacturer's site as it is determined by one or more of the scales 6.

As can be seen, the number of articles of type A decreases as the articles are being used by the manufacturer. At a time t1 the number of articles falls below a reorder threshold ThA, as stored in database 21. This tells service provider 8 that a refill should be ordered. However, since the next preferred delivery date t4 is still far away, the refill order is withheld. As long as the number of articles of type A does not fall below an express reorder threshold ExA, as stored in database 21, no immediate delivery is required.

If the number of articles does not fall below the express reorder threshold ExA, the refill order is withheld until a latest possible time, the order time t2, for issuing the order. Order date t2 is determined by

$$t2 = t4 - s - dtA \qquad (1)$$

wherein dtA is the regular delivery time that a supplier requires to process an order and ship an article to hub point 11, as stored in database 21, and s is the shipping time, i.e. the time it takes for the articles to be shipped from hub point 11 to storage 4 of manufacturer 1. Hence, by issuing an order at order date t2, the articles will reach hub point 11 at a time t3 = t4 - s, so that they can be shipped in time, together with any other required articles, to manufacturer 1.

Fig. 4 shows the situation for a different article type B with shorter delivery time dtB. Since delivery time dtB is shorter than dtA, a refill order for articles of type B can be issued at a later time than for articles of type A. Even though, in the present example, reorder threshold ThB for articles of type B is reached shortly before the preferred delivery date t4, the system recognizes that it is still possible to order the articles in time.

Figs. 3 and 4 both show a further threshold, the express reorder threshold ExA and ExB. When the number of articles falls below this threshold, an express order is issued to the appropriate supplier immediately. The corresponding articles will then be delivered as quickly as possible to the manufacturer, without waiting for the next preferred delivery date. This ensures that the stock is being refilled quickly.

The thresholds ThA, ThB, ExA and ExB can be set according to instructions from the manufacturer. However, in a preferred embodiment, they are adjusted automatically as it is described in the following section. It must be noted that such automatic adjustment of reorder thresholds is not only advantageous in a system with preferred delivery dates as described above, but it can also be applied in conventional systems, such as the one described in EP 915 325.

In order to dynamically adjust the thresholds, database 21 holds usage characteristics for each article type. This usage characteristics can e.g. comprise the following information:

> *predicted usage*: This is a usage predicted either by manufacturer 1, e.g. based on expected shipping numbers of product items 3, or by service supplier 8, e.g. based on numeric extrapolation of past usage data.
> *maximum expected fluctuation:* Some articles may be used in "bursts", i.e. the number decreases in step-like fashion because large lots the article are retrieved from the storage at a time. For such articles, the thresholds should be high enough to allow the manufacturer to retrieve one or more large lot without running out of stock.

These two concepts are explained in the following.

Predicted usage can e.g. consist of a prediction of the usage rate r (number of articles required in a given time period) of a given article type. In a simple embodiment, usage rates can e.g. be predicted by analyzing a usage history of a given article type stored in database 21. For example, the number of articles of a given type used in one week can be calculated over the recent twelve months and a linear extrapolation can be used to predict the usage rate r in the next month.

From a predicted usage rate rA for a given type A of articles, the reorder threshold ThA can e.g. be determined by

$$ThA = k \cdot (dtA + s) \cdot rA \qquad (2)$$

where k is a constant (e.g. 2) expressing a safety margin, while dtA and s are the delivery and shipping time as explained above. This equation takes into account that the delivery time dtA varies from article to article and makes sure that articles with long delivery times have a higher reorder threshold.

The express delivery threshold ExA can be calculated in similar fashion using Eq. (2) with a smaller value of constant k.

Predicted usage can also be based on a prediction of how many product items 3 the manufacturer expects to manufacture in the future. In this case, database 21 can e.g. hold information on how many articles of each type are required to manufacture one product item. From this data and from a prediction of the increase/decrease of the number of product items to be manufactured, an increase/decrease of the required number of articles of each type can be derived. This can again be used to predict a usage rate for each article.

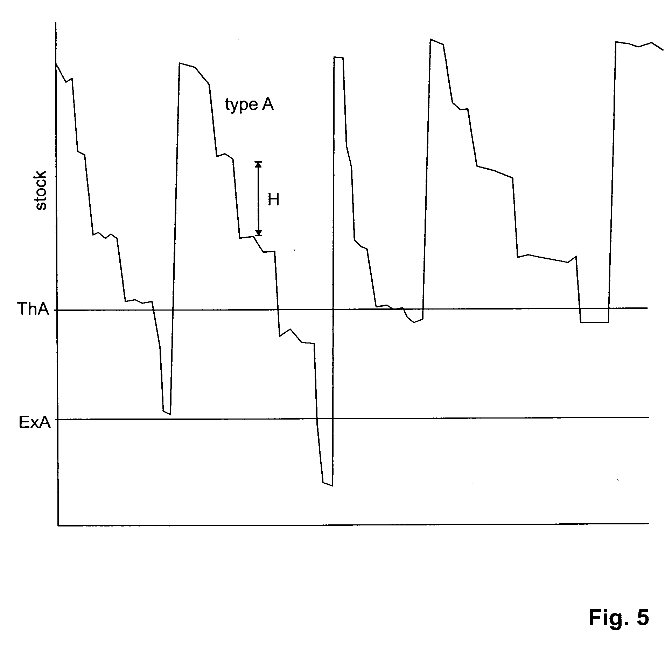

The concept of "maximum expected fluctuation" is illustrated in Fig. 5, which shows the amount of articles of a given type over several regular re-ordering periods. In contrast to the situations of Figs. 3 and 4, the usage rate of the article in Fig. 5 shows strong fluctuations because the article is mostly retrieved in large lots at irregular intervals. This leads to a decrease in step-like fashion, with a "typical" step height H. In order to avoid shortages, the reorder threshold ThA as well as the express reorder threshold ExA should be higher than height H, e.g. ThA = 4·H and ExA = 2·H.

The height H can be determined by analyzing the usage history stored in database 21. For example, a histogram of the distribution of the retrieved number of articles during the time period tdA+s in the curve of Fig. 5 can be used for detecting typical step heights. The value of H can e.g. be chosen such that 90% of the observed retrieved numbers are smaller than H.

The data stored in database 21 can be used to further optimize the flow of articles in several ways. For example, the reorder quantity (i.e. the number of articles ordered from the supplier at a time) should be a function of the reorder threshold. For example, the reorder quantity can be chosen such that, after delivery, the amount of articles of type A in storage 4 is a given multiple of the reorder threshold ThA.

Furthermore, by knowing the usage data of each article type, and in particular by knowing the reorder quantity, the maximum required capacity of each bin 5 can be estimated, which allows to reduce the bin size of bins with too large capacity and to minimize the space required by storage 4.

## Claims

1. A method for controlling the flow of several types of articles from one or more suppliers (10a, 10b, 10c) to a point of usage (1) comprising the steps of

   storing, at the point of usage (1), the articles in electronically monitored storage locations (5),

   monitoring the amount of articles at the point of usage (1) and triggering orders for the suppliers (10a, 10b, 10c) for delivering refills for the storage locations,

   **characterized by** the steps of

   determining a date of delivery (t4) for delivering the refills for several types of articles,

   maintaining a data base (21) with a delivery time (tdA, tdB) for each type of article,

   retrieving the delivery time (tdA, tdB) of a given type of article for determining a time (t2) for ordering the refill for the given article in time for the date of delivery (t4).

2. The method of claim 1 wherein the date of delivery (t4) is selected from a list of possible delivery dates, and in particular wherein the possible delivery dates are separated by given intervals.

3. The method of one of the preceding claims comprising the step of calculating from the date of delivery (t4) and from the delivery time (tdA, tdB) a latest possible time for issuing an order for a given type of article being delivered in time until the date of delivery.

4. The method of one of the preceding claims comprising the step of commonly transporting ordered articles of several article types to the point of usage on the date of delivery.

5. The method of one of the preceding claims comprising the steps of
    maintaining, in the data base (21), a usage rate (rA) for each type of article, and
    using the usage rate (rA) and the delivery time (tdA, tdB) of at least some of the types of articles for determining a type dependent reorder threshold (ThA, ThB), wherein the order for delivery of a given type of article is only issued if the number of articles of this type is below the reorder threshold (ThA, ThB).

6. A method for controlling the flow of several types of articles from one or more suppliers (10a, 10b, 10c) to a point of usage (1), in particular according to one of the preceding claims, comprising the steps of
    storing, at the point of usage (1), the articles in electronically monitored storage locations,
    electronically monitoring the amount of articles at the point of usage (1) and triggering orders for the suppliers (10a, 10b, 10c) for delivering refills for the storage locations,
    **characterized by** the steps of
    maintaining a data base (21) with usage characteristics for each type of article,
    using the usage characteristics for repetitively deriving a reorder threshold (ThA, ThB) for each type of article and
    triggering the order only if an amount of articles of a given type falls below the reorder threshold (ThA, ThB) of the given type.

7. The method of claim 6 wherein the usage characteristics stored in the data base comprises a predicted usage, in particular a predicted usage rate (r).

8. The method of claim 7 wherein a given set of types of articles are used to manufacture one product item (3), wherein the usage of the types of articles in the set are predicted from a prediction of a number of product items to be manufactured.

9. The method of one of the claims 6 - 8 wherein the usage characteristics comprises a maximum expected fluctuation (H) of articles of a given type in a given time interval.

10. The method of claim 9 wherein the maximum expected fluctuation (H) is determined from previously detected fluctuations of articles of the given type, and in particular wherein the method comprises the steps of
    storing historical usage data for a given type of article,
    scanning the historical usage data for analyzing a distribution of a retrieved number of articles per time period (tdA+s), and
    deriving the maximum expected fluctuation (H) from the distribution of the retrieved number.

11. The method of one of the preceding claims wherein at least some of the articles are stored in bins and wherein usage data stored in the data base is used to select a bin size.

**Fig. 1**

**Fig. 2**

Fig. 3

Fig. 4

Fig. 5

**European Patent Office**

**EUROPEAN SEARCH REPORT**

Application Number

EP 00 12 8386

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 29999 A (GEN ELECTRIC) 25 May 2000 (2000-05-25) * page 8, line 3 - page 9, line 9 * * page 9, line 28 - page 10, line 1 * * page 12, line 5 - line 12 * | 1,6 | G01G19/414 G06F17/60 |
| A,D | EP 0 915 325 A (BOSSARD TECHNOLOGIE AG) 12 May 1999 (1999-05-12) * abstract * | 1,6 | |
| A | EP 0 733 986 A (PANDUIT CORP) 25 September 1996 (1996-09-25) * abstract * | 1,6 | |
| A | GB 2 299 074 A (HENLID LTD) 25 September 1996 (1996-09-25) * abstract * | 1,6 | |

| | | | TECHNICAL FIELDS SEARCHED (Int.Cl.7) |
|---|---|---|---|
| | | | G01G G06F |

The present search report has been drawn up for all claims

| Place of search | Date of completion of the search | Examiner |
|---|---|---|
| THE HAGUE | 23 March 2001 | Ganci, P |

EPO FORM 1503 03 82 (P04C01)

**EP 1 217 345 A1**

**ANNEX TO THE EUROPEAN SEARCH REPORT
ON EUROPEAN PATENT APPLICATION NO.** EP 00 12 8386

This annex lists the patent family members relating to the patent documents cited in the above-mentioned European search report.
The members are as contained in the European Patent Office EDP file on
The European Patent Office is in no way liable for these particulars which are merely given for the purpose of information.

23-03-2001

| Patent document cited in search report | | Publication date | Patent family member(s) | | Publication date |
|---|---|---|---|---|---|
| WO 0029999 | A | 25-05-2000 | NONE | | |
| EP 0915325 | A | 12-05-1999 | EP | 0916932 A | 19-05-1999 |
| EP 0733986 | A | 25-09-1996 | US | 5608621 A | 04-03-1997 |
| | | | AU | 699563 B | 10-12-1998 |
| | | | AU | 4825596 A | 03-10-1996 |
| | | | BR | 9601123 A | 06-01-1998 |
| | | | CA | 2172452 A | 25-09-1996 |
| | | | CN | 1138179 A | 18-12-1996 |
| | | | JP | 9022435 A | 21-01-1997 |
| | | | NO | 961195 A | 25-09-1996 |
| GB 2299074 | A | 25-09-1996 | EP | 0733985 A | 25-09-1996 |

EPO FORM P0459